# EUROPÄISCHE PATENTSCHRIFT

(11) **EP 2 500 708 B1**
(45) Veröffentlichungstag und Bekanntmachung des Hinweises auf die Patenterteilung: **06.05.2020**
(21) Anmeldenummer: 12158992.3
(22) Anmeldetag: 12.03.2012
(51) Int. Cl.: G01M 17/04

(54) **Anordnung und Verfahren zur Baugruppenprüfung, insbesondere zur Achsdämpfungsprüfung, in Fahrzeugen**
Device and method for checking components, in particular axle suspension testing, in vehicles
Dispositif et procédé de vérification de blocs, notamment de vérification de l'amortissement d'essieu dans des véhicules

(30) Priorität: 16.03.2011 DE 102011005628; 09.01.2012 DE 102012200194
(43) Veröffentlichungstag der Anmeldung: 19.09.2012
(73) Patentinhaber: FSD Fahrzeugsystemdaten GmbH, 01307 Dresden (DE)
(72) Erfinder: Bönninger, Jürgen, 01326 Dresden (DE); Sternberg, Volker, 01099 Dresden (DE); Ussath, Robert, 01309 Dresden (DE); Drechsel, Frank, 01309 Dresden (DE)
(74) Vertreter: Lippert Stachow Patentanwälte Rechtsanwälte Partnerschaft mbB

(56) Entgegenhaltungen:
- WO-A1-2004/024521
- DE-A1- 4 019 501
- DE-A1- 4 440 413
- DE-A1- 10 320 809
- DE-A1- 19 814 357
- JP-A- 10 281 945
- US-A1- 2002 111 718
- US-A1- 2011 054 733

## Beschreibung

Die Erfindung betrifft ein Verfahren zur Baugruppenprüfung, bei dem eine Schwingung eines Fahrzeuges angeregt und Messdaten durch Messen des Beschleunigungs-, Verzögerungs- oder Schwingverhaltens mittels mindestens eines in das Fahrzeug eingebrachten und/oder mit dem Fahrzeug verbundenen Sensors erzeugt werden. Die Erfindung betrifft auch eine Anordnung zur Durchführung des Verfahrens mit einem Anregungsmittel zum Anregen einer Schwingung eines Fahrzeuges und einem Messmittel zum Messen des Beschleunigungs-, Verzögerungs- oder Schwingverhaltens mittels in das Fahrzeug eingebrachter und/oder mit dem Fahrzeug verbundener Sensoren.

Aus der DE 10 2004 012 143 B3 ist ein Verfahren zum Testen der Funktion von in einem Kraftfahrzeug verbauten elektrischen und elektronischen Komponenten bekannt. Dadurch soll die Vielzahl der elektrischen und elektronischen Komponenten und deren Zusammenwirken einem Funktionstest unter möglichst realen Prüfbedingungen unterzogen werden. Hierbei werden von einem zu dem zu prüfenden Fahrzeug typgleichen Fahrzeug Testdaten unter realen Fahrbedingungen aufgenommen und anschließend dem Testfahrzeug auf den Bus, über den die Komponenten miteinander verbunden sind, gegeben. Hierbei handelt es sich immer um eine Diagnose an ein und demselben Fahrzeugtyp, dessen Busprotokoll und die Schnittstellenkonfigurationen, einschließlich der Konfiguration der Fahrzeug-Diagnose-Schnittstelle, bekannt sind und unverändert bleiben.

In der DE 20 2006 019 993 U1 ist ein mobiles Diagnosegerät für Kraftfahrzeuge beschrieben. Diese Lösung setzt einen Adapter ein, der an eine OBD-Schnittstelle (OBD = on-boarddiagnostics) anschließbar ist und der einen Prozessor aufweist. Dieser Prozessor steuert einerseits die Konfiguration eines Interface für den fahrzeugtypspezifischen Anschluss des Adapters an die fahrzeugtypspezifisch beschaltete OBD-Schnittstelle. Andererseits steuert dieser Prozessor das Auslesen eines Fehlerspeichers. Damit dient diese Lösung der Fahrzeugdiagnose, bei der festgestellt wird, ob während des Betriebs des Fahrzeuges Fehler aufgetreten sind. Das Auslesen des Fehlerspeichers wird dahingehend überwacht, dass der Bedienperson signalisiert wird, wenn ein Fehler in dem Fehlerspeicher festgestellt wird. Darüber hinaus ist bei dieser Lösung eine Konfiguration für einen bestimmten Fahrzeugtyp zwar möglich, jedoch ist ein ständiger Fahrzeugtypwechsel nicht vorgesehen, insbesondere wenn kurze Wechselzeiten eingehalten werden müssen.

DE 10258265 A1 betrifft ein Verfahren zur Überwachung von Feder-Dämpfersystemen, bei dem während der Fahrt das Schwingungsverhalten der Feder-Dämpfereinheit sensorisch erfasst wird und aus dem Schwingungsverhalten ein Fehlverhalten der Feder-Dämpfereinheit/en, wie etwa ein Defekt, eine Fehlfunktion oder eine Abweichung der Eigenschaften vom Normbereich, etc. festgestellt wird, und bei dem zur Erkennung des Fehlverhaltens das Abklingverhalten einer Schwingungskurve und/oder deren Schwingungsfrequenz als Folge einer, insbesondere zeitlich begrenzten, mechanischen Anregung der Feder-Dämpfereinheiten beobachtet wird. Nachteilig dieses Verfahrens ist, dass durch die Schwingungsanregung eine Schwingung erzeugt werden muss, deren zeitlicher Verlauf ungefähr dem einer idealisierten gedämpften Schwingung, mithin einem Sinus mit exponentiell abfallender Einhüllender, entspricht, da die Parameter der gedämpften Schwingung, insbesondere Abklingkonstante und Frequenz, zur Klassifikation des Dämpfungsverhaltens herangezogen werden. Insbesondere ist es mit diesem Verfahren nicht möglich, das Schwingungsverhalten bei laufender Fahrt, welche durch eine stochastische Schwingungsanregung gekennzeichnet ist, zu bestimmen.

EP 0997720 A2 betrifft ein Verfahren zur Bremsenprüfung mittels Verzögerungsmessung von Kraftfahrzeugen, bei dem das Fahrzeug aus einer bestimmten Bewegung heraus zum Stillstand abgebremst wird. Bei dem Prüfvorgang wird die lineare Verzögerung des Fahrzeuges mittels linearem Beschleunigungsgebers in Richtung der Fahrzeuglängsachse sowie die Querbeschleunigung mittels eines zweiten linearen Beschleunigungsgeber als Funktion der Zeit gemessen und registriert, und daraus werden die relevanten, zugehörigen Bremskräfte ermittelt, wobei die Abbremsung als Vollbremsung aus einer bestimmten Geschwindigkeit heraus zum Stillstand und ohne Eingriff am Lenkrad erfolgt und die Beschleunigungsgeber zum Prüfzweck mit dem Fahrzeug starr verbunden werden. Insbesondere wird mittels eines dritten linearen Beschleunigungsgebers oder eines zweiten Drehratensensors das Einnicken des Fahrzeuges auf die Bremsauflage hin festgestellt und zur Bewertung der Qualität der Radaufhängung, insbesondere der Stoßdämpfer ausgewertet.

In der US 2002/0111718 A1 wird ein Verfahren zur Vorhersage der Schall- und Vibrationspegel im Inneren eines auf einem Boden mit einem oder mehreren Hindernissen oder auf einem Boden mit gegebener Korngröße fahrenden Fahrzeugs beschrieben. Dabei fährt das Fahrzeug mit einer gegebenen Geschwindigkeit V auf einem Boden, der mit mindestens einem Hindernis einer vorbestimmten Größe versehen ist. Das Verfahren weist einen ersten Schritt der Bestimmung einer globalen Übertragungsfunktion des mit einem Bezugs-Verbindungssystem mit dem Boden ausgestatteten Fahrzeugs, und einen zweiten Schritt auf, in dem an den Verbindungspunkten des Prototyp-Verbindungssystems mit dem Boden mit dem Aufbau Kräfte gemessen werden. Indem dann die am mit dem Bezugs-Verbindungssystem mit dem Boden ausgestatteten Fahrzeug gemessenen Werte und die am Bezugssystem alleine gemessenen Werte verwendet werden, berechnet man für jede um die Geschwindigkeit V herum liegende Geschwindigkeit eine für das Fahrzeug charakteristische globale Übertragungsfunktion, die aus einer ersten Übertragungsfunktion, die es ermöglicht, unter Berücksichtigung der Kräfte an den Verbindungspunkten mit dem Aufbau den Schalldruck im Fahrzeuginnenraum zu bestimmen, und einer zweiten Übertragungsfunktion besteht, die es unter Berücksichtigung der gleichen Kräfte an den Verbindungspunkten mit dem Aufbau ermöglicht, die Vibrationspegel am Lenkrad und am Boden des Fahrzeugs zu erhalten.

In der JP 10-281945 A wird eine Anordnung zur Bewertung des Fahrkomforts beschrieben. Dabei wird davon ausgegangen, dass die Differenz einer ersten physikalischen Größe und einer zweiten physikalischen Größe, die jeweils auf einen menschlichen Körper, insbesondere in seiner Sitzposition einwirken, ein Maß für den Fahrkomfort eines Menschen in einem Fahrzeug darstellen. Dabei wir die erste physikalisch Größe durch eine direkt auf den menschlichen Körper einwirkende Vibration und die zweite physikalische Größe durch eine Differenz der Zeitverzögerung einer Vibration in alle Richtung, die dem menschlichen Körper hinzugefügt wird, gebildet wird.

Durch die beiden vorstehend genannten Verfahren werden Analysen von Schwingungen zur Beurteilung des Fahrkomforts durchgeführt. Eine Analyse der technischen Funktion von Fahrzeugbaugruppen, insbesondere zur Achsdämpfungsprüfung, ist durch diese Verfahren nicht möglich.

In DE 44 40 413, DE 103 20 809, DE 40 19 501, US 2011/054733, DE 198 14 357 und WO 2004/024521 werden andere Anordnungen und Verfahren beschrieben.

Es soll an dieser Stelle ausdrücklich betont werden, dass in der gesamten Beschreibung unter dem Begriff des Fahrzeuges jede Fahrzeugart, wie allgemein Kraftfahrzeuge oder Nutzfahrzeuge, Krafträder, Kraftfahrzeuganhänger usw., und der Kombinationen davon verstanden werden soll.

Es ist daher Aufgabe der vorliegenden Erfindung, ein Verfahren zur Baugruppenprüfung, insbesondere zur Achsdämpfungsprüfung bereitzustellen, das zuverlässig ist und sicher arbeitet.

Diese Aufgabe wird durch ein Verfahren und eine Vorrichtung gemäß den unabhängigen Ansprüchen 1 und 8 gelöst. Die abhängigen Ansprüche 2 bis 7, 9 und 10 betreffen besondere Ausführungsformen.

Bei dem erfindungsgemäßen Verfahren wird ein Fahrzeug zum Schwingen angeregt. Das Beschleunigungs-, Verzögerungs- oder Schwingverhalten wird mittels mindestens eines in das Fahrzeug eingebrachten und/oder mit dem Fahrzeug verbundenen Sensors gemessen. Diese Messdaten werden mittels eines lernbasierten Klassifikationsalgorithmus ausgewertet. Dieser dient zur Klassifikation der Funktionalität von Achsdämpfern im Sinne von Gebrauchstauglichkeit. Hierbei wird ein Trainingssatz von Messdaten durch Messen des Beschleunigungs-, Verzögerungs- oder Schwingverhaltens in einer definierten Messumgebung für ein Fahrzeug und/oder einen Fahrzeugtyp erstellt. Mittels des Trainingssatzes von Messdaten und anhand bekannter Achsdämpfungsparameter wird der Klassifikationsalgorithmus trainiert. Ist das Training des Klassifikationsalgorithmus abgeschlossen, werden im laufenden Achsdämpfungsmessungsverfahren Messwerte mittels des Klassifikationsalgorithmus ausgewertet. Das Klassifikationsergebnis wird in Form einer dichotomen Entscheidung über den Funktionszustand des Achsdämpfers und/oder eines Degradationsgrades der Funktionalität des Achsdämpfers ausgegeben. Die Klassifikation kann auch mit einem bereitgestellten, bereits trainierten Klassifikationsalgorithmus erfolgen.

Es ist dabei auch möglich, dass der Trainingssatz mit klassifizierten Messdaten einer aktuellen Messung erweitert wird. Das Trainieren des Klassifikationsalgorithmus für die Klassifizierung nachfolgender Messdaten erfolgt dann mittes dieses erweiterten Trainingssatzes. Somit werden nicht nur initiale Messungen zum Trainieren genutzt, sondern auch die aktuellen Messungen selbst.

Ein weiterer Aspekt der Erfindung betrifft die Schwingungsanregung. Diese kann durch einmalige Anregung durch ein Hindernis wie eine Schwelle, ein Schlagloch oder eine Rampe erfolgen. Beim Überfahren des Hindernisses werden die Achsen einmalig zum Schwingen angeregt und der Schwingungsverlauf mittels Beschleunigungs- und/oder Drehratensensor aufgenommen. Des Weiteren kann die Schwingungsanregung periodisch erfolgen. Mehrere gleichartige Hindernisse, die in bestimmten Abständen zueinander folgen, werden überfahren. Hierbei wird eine Aussage über die Höhe der Schwingungsamplitude bei Resonanzfrequenz getroffen. Diese lässt wiederum Schlüsse auf die Dämpfung des Systems zu. Zudem kann die Schwingungsanregung beim Bremsen, insbesondere durch Verbindung von dynamischer Bremsprüfung und Dämpfungsprüfung erfolgen. Hierbei wird das Fahrzeug stark abgebremst, wobei das Fahrzeug einnickt. Wenn das Fahrzeug zum Stillstand gekommen ist, geht das Fahrzeug von der eingenickten Position in den Ruhezustand über. Dieser Übergang folgt einer gedämpften Schwingung. Die Schwingungsanregung kann auch stochastisch während normaler Fahrt erfolgen. Hierbei fährt der Prüfer über eine undefinierte Strecke über eine undefinierte Zeit. Der Schwingungsverlauf wird aufgenommen und bewertet. Mittels geeigneter Verfahren wird eine Aussage über die Güte der Dämpfer des Systems getroffen.

Die Klassifizierung der Messergebnisse kann vorzugsweise durch einen Vergleich mit bekannten fehlerfreien Messergebnismustern erfolgen.

Ein Aspekt der Erfindung betrifft die Auswertung der Messdaten in Form einer Bewertung des Schwingverhaltens. Diese erfolgt vorzugsweise in Richtung der Erdbeschleunigung und in Querrichtung, anhand einzelner Schwingungsparameter wie Abklingkonstante, Dämpfungsgrad, Schwingungsdauer, Frequenz.

In einer Ausgestaltung der Erfindung wird das Schwingverhalten im Zeitbereich gemessen. Die Klassifikation kann jedoch nach einer Transformation im Frequenzbereich erfolgen.

Ein weiterer Aspekt der Erfindung betrifft die Ausrichtung des Sensors. Diese erfolgen numerisch anhand des Messens der Erdbeschleunigung im Stand und der Beschleunigung während einer Geschwindigkeitsänderung, vorzugsweise durch eine Koordinatentransformation.

Im Stand wird über eine Mittelwertbildung der Beschleunigungswerte, die im Koordinatensystem des Sensors SKS abgebildet sind, der Erdbeschleunigungsvektor ermittelt. Der Winkel zwischen diesem Vektor und dem Einheitsvektor in Richtung der Z-Achse und der Normalenvektor (Drehachse) zu der Ebene, die diese beiden Vektoren aufspannen, werden ermittelt. Daraus wird eine erste Rotationsmatrix berechnet und es entsteht ein zweites Koordinatensystem SKS*.

Während der Geschwindigkeitsänderung wird der Fahrzeugbeschleunigungsvektor ermittelt, indem die in dem zweiten Koordinatensystem SKS* abgebildeten X- und Y-Werte jeweils gemittelt werden und der Winkel zwischen dem Vektor der Mittelwerte und dem Einheitsvektor in Richtung der X-Achse bestimmt wird. Mit dem Winkel und der Drehachse, die nun dem Einheitsvektor in Richtung der Z-Achse entspricht, kann eine zweite Rotationsmatrix berechnet werden, mit der das zweite Koordinatensystem SKS* in das Fahrzeugkoordinatensystem FKS überführt werden kann.

Mittels Matrizenmultiplikation lassen sich die beiden Rotationsmatrizen kombinieren und die Beschleunigungs- und Drehraten-Rohdaten aus dem Koordinatensystem SKS können nun mittels der resultierenden Matrix direkt im Fahrzeugkoordinatensystem FKS abgebildet werden.

Ein Aspekt der Erfindung betrifft die Auswertung von den mittels des Sensors gewonnenen Messwerten. Diese werden in Kombination mit weiteren mittels weiterer Sensoren gewonnener Messwerte, vorzugsweise des Bremsdruckes, bevorzugt in Hinblick auf die Plausibilität der gewonnenen Messergebnisse, analysiert.

In einer Ausgestaltung der Erfindung ist vorgesehen, dass die Messwerte gespeichert werden.

Durch eine Speicherung der Messwerte ist es möglich, diese nach Entfernen des Adapters aus dem Fahrzeug auszuwerten.

Es ist auch möglich, dass die Messwerte von dem Adapter über eine Schnittstelle an eine Auswerteeinheit übertragen werden.

Ein weiterer Aspekt der Erfindung betrifft die Schwingungsanregung. Hierbei wird die sich ergebende Schwingung auf vermeidbare Fehler wie schräges Auffahren und/oder fehlerhafte Kalibrierung und/oder eine unpassende, z.B. eine zu hohe oder zu geringe, Geschwindigkeit überprüft.

Die anordnungsseitige Lösung der Aufgabenstellung besteht in einer Vorrichtung, welche Anregungsmittel zum Anregen einer Schwingung eines Fahrzeuges, Messmittel zum Messen des Beschleunigungs-, Verzögerungs- oder Schwingverhaltens mittels in das Fahrzeug eingebrachter und/oder mit dem Fahrzeug verbundener Sensoren und Auswertemittel zum Auswerten der Messdaten mittels des im Verfahren beschriebenen lernbasierten Klassifikationsalgorithmus aufweist. Dabei ist ein in ein Fahrzeug einbringbarer oder mit dem Fahrzeug verbindbarer Adapter mit einem 3-Achs-Beschleunigungs- und/oder eines 3-Achs-Drehratensensors versehen, der mit Mitteln zur Aufnahme von Messwerten verbunden ist.

Durch die Integration eines Beschleunigungssensors, vorzugsweise ein 3-D-Beschleunigungssensor und/oder ein Drehratensensor, vorzugsweise ein 3-D-Drehratensensor in dem Adapter wird es möglich, mit dem Adapter physisch-dynamische Prüfungen, wie beispielsweise eine Bremsreferenzprüfung oder eine Aufbauschwingungsprüfung, durchzuführen.

Eine weitere Möglichkeit der Nutzungserweiterung besteht darin, dass für den Adapter externe Sensoren abgefragt werden. Damit wird es möglich, fahrzeuginterne Sensoren, insbesondere über den Fahrzeug-Kommunikationsbus abzufragen. Aber auch Werte von externen Diagnoseeinrichtungen oder externer Prüfstände oder Sensoren können auf den Adapter übertragen werden. Hierfür bieten sich herkömmliche drahtlose Verbindungen, wie WLAN UMTS oder Bluetooth an. Aber auch eine Drahtverbindung, beispielsweise über USB oder LAN ist hierbei möglich.

Somit wird es auch möglich, beispielsweise zur Überprüfung eines Geräuschspegels oder einer bestimmter Geräuschkulisse im Fahrgastraum oder außerhalb dessen ein Mikrophon als externern Sensor an den Adapter anzuschließen. Beispielsweise können aufgenommene aktuelle Geräuschbilder zum Vergleich mit Soll-Geräuschbildern verwendet werden. Abweichungen beider Geräuschbilder voneinander sind meist signifikant für bestimmte Fehler- oder Verschleißarten oder falsche Bauteile, wie beispielsweise nicht zugelassene Schalldämpfer. Mit dem Adapter kann damit auch ein Hinweis auf Fehler oder Verschleißzustände oder nicht zulässige Bauteile gewonnen werden.

Um zu vermeiden, dass der Adapter von der Bordspannung abhängig ist, ist es zweckmäßig, den Adapter mit einer eigenen Stromversorgung zu versehen.

Die Erfindung soll nachfolgend anhand eines Ausführungsbeispieles näher erläutert werden.

In den zugehörigen Zeichnungen zeigt
- Fig. 1: eine schematische Darstellung einer dynamischen Bremsenprüfung mit adaptereigenen Sensoren,
- Fig. 2: eine schematische Darstellung einer quasistatischen Bremsenprüfung und
- Fig. 3: eine schematische Darstellung einer Stoßdämpferprüfung mit dem Adapter.

Zur Ermittlung der Funktionsfähigkeit mechanischer Baugruppen in einem Fahrzeug 4, wie Bremssystem oder Stoßdämpfer wird erfindungsgemäß ein Adapter 1 vorgeschlagen, der mit einem 3-Achs-Beschleunigungs- und/oder einem 3-Achs-Drehratensensor 6 versehen ist. Damit wird es möglich, Beschleunigungen, Verzögerung und Schwingungen im Fahrzeug aufzunehmen, wie dies nachfolgend beispielhaft geschildert wird. Der Adapter erhält seinen Namen, da er gegebenenfalls auch über eine geeignete Schnittstelle, beispielsweise eine Fahrzeug-Diagnoseschnittstelle 2 mit einem Fahrzeugbus 5 verbindbar ist.

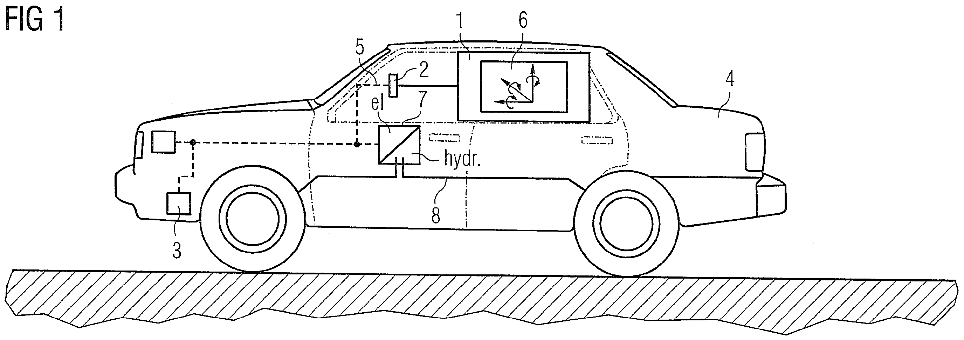

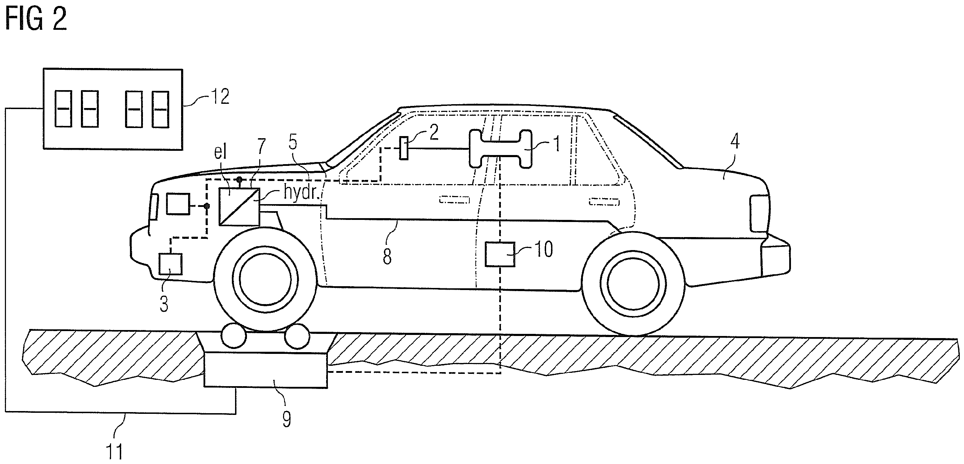

Wie in Fig. 1 und Fig. 2 dargestellt, werden nachfolgend zwei Beispiele für eine Bremsenprüfung auf der Grundlage von Referenzwerten beschrieben.

Bei einer dynamischen Bremsenprüfung, wie in Fig. 1 dargestellt, werden adaptereigene (adapterinterne) Sensoren 6 genutzt. Dabei wird das Fahrzeug während einer Probefahrt sehr stark verzögert. Während der Verzögerung nutzt der Adapter 1 die fahrzeuginterne Sensorik in Form eines Steuergerätes 7, das den Bremsdruck auf der Bremsleitung 8 kontrolliert, und liest den Bremsdruck im Fahrzeug 4 kontinuierlich durch Absenden eines Abfragebefehls und Auswerten des jeweiligen Reaktionssignals aus.

Gleichzeitig wird die adapterinterne Sensorik genutzt, nämlich der 3D-Beschleunigungssensor 6, um die Verzögerung des Fahrzeugs 4 zu ermitteln.

Durch Auswertung und Vergleich des adapterinternen Sensors 6 mit den fahrzeugintern gemessenen Werten können nun Rückschlüsse über die Wirkung der Bremse getroffen werden.

Bei einer quasistatischen Bremsenprüfung, wie in Fig. 2 dargestellt, werden adapter-externe Sensoren in Form eines Bremsenprüfstandes 9 genutzt. Dazu wird mit dem Fahrzeug 4 auf einem Bremsenprüfstand 9 die Bremsleistung 8 des Fahrzeugs 4 gemessen. Die vom Bremsenprüfstand 9 ermittelten Messdaten der Bremsleistung 8 werden an den Adapter 1 über geeignete Schnittstellen 10 wie z.B. Bluetooth übertragen. Diese werden im Übrigen auch über eine Datenanzeigeleitung 11 an eine Anzeigeeinrichtung 12 des Bremsenprüfstandes 9 übermittelt und dort dargestellt.

Gleichzeitig nutzt der Adapter 1 während der Bremsung die fahrzeuginterne Sensorik 7 und liest den Bremsdruck im Fahrzeug 4 kontinuierlich aus. Dies geschieht durch Absenden eines Abfragebefehls und Auswerten des jeweiligen Reaktionssignals.

Durch Auswertung und Vergleich der fahrzeugexternen Messung mit den fahrzeugintern gemessenen Werten können nun Rückschlüsse über die Wirkung der Bremse getroffen werden.

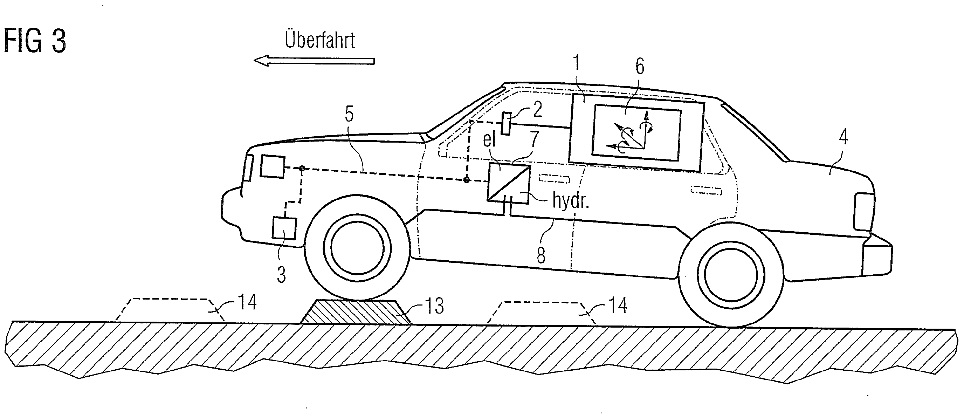

In Fig. 3 ist eine Stoßdämpferprüfung mittels interner Sensorik 6 dargestellt. Eine Schwingungsmessung erfolgt nach Anregung durch eine Fahrt über eine äußere physische Erregung 13 in Form einer Schwelle, Rampe o.ä., durch Bewertung der Ausschwingverhaltens. Die physische Erregung 13 kann auch periodisch durch eine Überfahrt mehrerer Huckel 14 erfolgen, um den Fahrzeugaufbau in Resonanz zu versetzen. Das Erreichen der Resonanz ist einerseits abhängig von dem Abstand der Huckel 14, und andererseits der Überfahrtsgeschwindigkeit des Fahrzeugs 4.

Die Höhe der Resonanz lässt Aussagen zum Zustand der Achsdämpfung zu.

Dazu wird die Schwingung mittels eines 3-Achs-Beschleunigungs- und/oder eines 3-Achs-Drehratensensors 6 aufgenommen. Das System wird sodann geeigneter Schwingungsdämpfergrößen, wie beispielsweise Abklingkonstante, Dämpfungsmaß oder Dämpfungs-Güte bewertet.

Die Ausrichtung des Adapters 1 im Auto 4 selbst erfolgt mittels Ermittlung des Erdbeschleunigungsvektors und durch den Beschleunigungsvektor, während der Geschwindigkeitserhöhung des Fahrzeugs (positive Beschleunigung).

Die ermittelten Werte können hinsichtlich ihrer Güte bwz. der Bewertbarkeit klassifiziert werden. Dies geschieht durch die Erkennung von vermeidbaren Messfehlern oder einer Kompensation von Messfehlern durch geeignete mathematische Verfahren. Solche Messfehler können durch schräges Auffahren, durch Störschwingungen auf Grund von unebener Fahrbahn, durch eine Fehlkalibrierung wegen Kurvenanfahrt oder durch zu hohe Geschwindigkeit auftreten. Über eine geschickte Auswertung ist eine achs- oder radspezifische Zuordnung oder eine Trennung der Messwerte möglich. Vorteil des erfindungsgemäßen Verfahrens ist die prinzipielle Detektierbarkeit von Schäden oder Defekten an einer Vielzahl weiterer Fahrzeugbaugruppen wie Radaufhängung, Federdämpferlagerung, Federn und Gelenke. Insbesondere ist ein Federbruch erkennbar. Zudem kann das Verfahren dazu verwendet werden, Reifenschäden zu detektieren und klassifizieren.

### Bezugszeichenliste

- 1: Adapter
- 2: Fahrzeug-Diagnose-Schnittstelle
- 3: Steuergerät
- 4: Fahrzeug
- 5: Bus
- 6: 3-D-Beschleunigungssensor (adapterinterner Sensor)
- 7: Steuergerät, das den Bremsdruck kontrolliert
- 8: Bremsleitung
- 9: Bremsenprüfstand
- 10: Schnittstelle externer Sensor / Adapter
- 11: Datenanzeigeleitung
- 12: Anzeigeeinrichtung
- 13: physische Erregung
- 14: Huckel

## Patentansprüche

1. Verfahren zur Baugruppenprüfung, bei dem
- ein Adapter (1) mit mindestens einem adapterinternen Sensor (6) in ein Fahrzeug (4) eingebracht und über eine Fahrzeug-Diagnose-Schnittstelle (2) mit einem Fahrzeug-Kommunikationsbus (5) des Fahrzeugs (4) verbunden wird,
- der adapterinterne Sensor (6) anhand des Messens der Erdbeschleunigung im Stand und der Beschleunigung während einer Geschwindigkeitsänderung numerisch ausgerichtet wird,
- eine Schwingung des Fahrzeugs (4) angeregt und Messdaten durch Messen des Beschleunigungs-, Verzögerungs- oder Schwingverhaltens mittels des adapterinternen Sensors (6) erzeugt werden,
- eine Kombination der mittels des adapterinternen Sensors (6) gewonnenen Messwerte und weiterer, mittels adapterexterner Sensoren (3; 7; 9) gewonnener Messwerte im Hinblick auf die Plausibilität der gewonnenen Messergebnisse analysiert werden,
- ein lernbasierter Klassifikationsalgorithmus dadurch bereitgestellt wird, dass ein Trainingssatz von Messdaten durch Messen des Beschleunigungs-, Verzögerungs- oder Schwingverhaltens in einer definierten Messumgebung für ein Fahrzeug und/oder einen Fahrzeugtyp erstellt wird und der Klassifikationsalgorithmus mittels des Trainingssatzes von Messdaten und anhand bekannter Achsdämpfungsparameter trainiert wird;
- die Messdaten mittels des auf diese Art und Weise trainierten Klassifikationsalgorithmus klassifiziert werden; und
- das Klassifikationsergebnis in Form einer dichotomen Entscheidung über den Funktionszustand des Achsdämpfers und/oder eines Degradationsgrades der Funktionalität des Achsdämpfers ausgegeben wird.

2. Verfahren nach Anspruch 1, das aufweist: Erweitern des Trainingssatzes mit klassifizierten Messdaten einer aktuellen Messung; und Trainieren des Klassifikationsalgorithmus für die Klassifizierung nachfolgender Messdaten.

3. Verfahren nach Anspruch 1 oder 2, das aufweist:
Anregen der Schwingung des Fahrzeuges durch ein Hindernis oder periodisch durch Hindernisse (14), die in bestimmten Abständen folgen oder durch Einnicken beim Bremsen oder stochastisch durch Fahrt über eine undefinierte Strecke und eine undefinierte Zeit.

4. Verfahren nach einem der Ansprüche 1 bis 3, das aufweist:
Auswerten der Messdaten in Form einer Bewertung des Schwingverhaltens, vorzugsweise in Richtung der Erdbeschleunigung und in Querrichtung, anhand einzelner Schwingungsparameter wie Abklingkonstante, Dämpfungsgrad, Schwingungsdauer, Frequenz.

5. Verfahren nach einem Ansprüche 1 bis 4, das aufweist:
Messen des Schwingverhaltens im Zeitbereich und
Klassifizieren des Schwingverhaltens im Frequenzbereich.

6. Verfahren nach einem der Ansprüche 1 bis 5, das aufweist:
Speichern der Messdaten.

7. Verfahren nach einem der Ansprüche 1 bis 6, das aufweist:
Überprüfen der Schwingung auf vermeidbare Fehler wie schräges Auffahren und/oder fehlerhafte Kalibrierung und/oder unpassende Geschwindigkeit.

8. Vorrichtung zum Durchführen eines Verfahrens nach einem der Ansprüche 1 bis 7,
- mit einem Anregungsmittel (13; 14) zum Anregen einer Schwingung eines Fahrzeugs (4), und
- mit einem über eine Fahrzeug-Diagnose-Schnittstelle (2) mit einem Fahrzeug-Kommunikationsbus (5) des Fahrzeugs (4) und mit adapterexternen Sensoren (3; 7; 9) verbundenen Adapter (1), der Folgendes aufweist:
- ein Messmittel zum Messen des Beschleunigungs-, Verzögerungs- oder Schwingverhaltens mittels in das Fahrzeug eingebrachter adapterinterner Sensoren (6), und
- mit einem Auswertemittel zum Auswerten der Messdaten mittels des lernbasierten Klassifikationsalgorithmus, wobei das Auswertemittel dazu eingerichtet ist, das Verfahren nach einem der Ansprüche 1 bis 7 auszuführen, wobei
- das Messmittel als ein in das Fahrzeug eingebrachter, mit Mitteln zur Aufnahme von Messwerten verbundener, adapterinterner Sensor (6) ausgebildet ist, welcher einen Beschleunigungs- und/oder Drehratensensor umfasst.

9. Vorrichtung nach Anspruch 8, **dadurch gekennzeichnet, dass** der Adapter (1) mit adapterexternen Sensoren (9) drahtlos, insbesondere über WLAN, UMTS oder Bluetooth verbunden ist.

10. Vorrichtung nach Anspruch 8, **dadurch gekennzeichnet, dass** der Adapter mit adapterexternen Sensoren (9) über USB oder LAN verbunden ist.

## Claims

1. Method for checking components, in which
- an adapter (1) with at least one adapter-internal sensor (6) is introduced into a vehicle (4) and connected to a vehicle communication bus (5) of the vehicle (4) via a vehicle-diagnostic interface (2),
- the adapter-internal sensor (6) is numerically aligned on the basis of measurement of the acceleration due to gravity in a stationary state and acceleration during a change in speed,
- an oscillation of the vehicle (4) is excited, and measurement data are generated by measuring the acceleration, deceleration or oscillatory behaviour, by means of the adapter-internal sensor (6),
- a combination of the measured values acquired by means of the adapter-internal sensor (6) and further measured values acquired by means of adapter-external sensors (3; 7; 9) are analysed with the respect to the plausibility of the acquired measurement results,
- a learning-based classification algorithm is made available by virtue of the fact that a training set of measurement data is produced by measuring the acceleration, deceleration or oscillatory behaviour in a defined measuring environment for a vehicle and/or a type of vehicle, and the classification algorithm is trained by means of the training set of measurement data and on the basis of known axle damping parameters;
- the measurement data are classified by means of the classification algorithm which is trained in this way; and
- the classification result is output in the form of a dichotomous decision about the functional state of the axle damper and/or a degree of degradation of the functionality of the axle damper.

2. Method according to Claim 1, which comprises:
expanding the training set with classified measurement data from a current measurement; and
training the classification algorithm for the classification of subsequent measurement data.

3. Method according to Claim 1 or 2, which comprises:
exciting the oscillation with the vehicle by means of an obstacle or periodically by means of obstacles (14) which follow at specific intervals, or by means of pitching during braking or stochastically by means of travel over an undefined distance and an undefined time.

4. Method according to one of Claims 1 to 3, which comprises:
evaluating the measurement data in the form of an evaluation of the oscillatory behaviour, preferably in the direction of the acceleration due to gravity and in the transverse direction, on the basis of individual oscillation parameters such as the decay constant, degree of damping, duration of oscillation and the frequency.

5. Method according to one of Claims 1 to 4, which comprises:
measuring the oscillatory behaviour in the time domain and
classifying the oscillatory behaviour in the frequency domain.

6. Method according to one of Claims 1 to 5, which comprises:
storing the measurement data.

7. Method according to one of Claims 1 to 6, which comprises:
checking the oscillation for avoidable faults such as oblique approaching from behind and/or faulty calibration and/or unadapted speed.

8. Device for carrying out a method according to one of Claims 1 to 7,
- having an excitation means (13; 14) for exciting an oscillation of a vehicle (4), and
- having an adapter (1) which is connected via a vehicle diagnostic interface (2) to a vehicle communication bus (5) of the vehicle (4) and to adapter-external sensors (3; 7; 9) and which comprises the following:
- a measuring means for measuring the acceleration, deceleration or oscillatory behaviour by means of adapter-internal sensors (6) which are introduced into the vehicle, and
- having an evaluation means for evaluating the measurement data by means of the learning-based classification algorithm, wherein the evaluation means is configured to carry out the method according to one of Claims 1 to 7, wherein
- the measuring means is embodied as an adapter-internal sensor (6) which is introduced into the vehicle and is connected to means for recording measured values and which comprises an acceleration sensor and/or rotational speed sensor.

9. Device according to Claim 8, **characterized in that** the adapter (1) is connected to adapter-external sensors (9) in a wireless fashion, in particular via WLAN, UMTS or Bluetooth.

10. Device according to Claim 8, **characterized in that** the adapter is connected to adapter-external sensors (9) via USB or LAN.

## Revendications

1. Procédé de vérification de modules, dans lequel
- un adaptateur (1) comportant au moins un capteur (6) interne à l'adaptateur est monté dans un véhicule (4) et est relié à un bus de communication de véhicule (5) du véhicule (4) par l'intermédiaire d'une interface de diagnostic de véhicule (2),
- le capteur (6) interne à l'adaptateur est ajusté numériquement sur la base de la mesure de l'accélération gravitationnelle à l'arrêt et de l'accélération lors d'une modification de la vitesse,
- une oscillation du véhicule (4) est excitée et des données de mesure sont générées par mesure du comportement en accélération, en décélération ou en oscillation au moyen du capteur (6) interne à l'adaptateur,
- une combinaison des valeurs de mesure obtenues au moyen du capteur (6) interne à l'adaptateur et d'autres valeurs de mesure obtenues au moyen de capteurs (3 ; 7 ; 9) externes à l'adaptateur peut être analysée en ce qui concerne la plausibilité des résultats de mesure obtenus,
- un algorithme de classification basé sur l'apprentissage est fourni par création d'un ensemble de données de mesure par mesure du comportement en accélération, en décélération ou en oscillation dans un environnement de mesure défini pour un véhicule et/ou un type de véhicule et l'algorithme de classification est soumis à un apprentissage au moyen de l'ensemble d'apprentissage de données de mesure et sur la base de paramètres connus d'amortissement des essieux ;
- les données de mesure sont classées au moyen de l'algorithme de classification ayant ainsi été soumis à un apprentissage ; et
- le résultat de la classification est délivré sous la forme d'une décision dichotomique quant à l'état fonctionnel de l'amortisseur d'essieu et/ou d'un degré de dégradation de la fonctionnalité de l'amortisseur d'essieu.

2. Procédé selon la revendication 1, comportant :
l'ajout à l'ensemble d'apprentissage de données de mesure classées d'une mesure actuelle ; et l'apprentissage de l'algorithme de classification pour la classification de données de mesure suivantes.

3. Procédé selon la revendication 1 ou 2, comprenant :
l'excitation de l'oscillation du véhicule par un obstacle ou périodiquement par des obstacles (14) qui se suivent à des distances déterminées ou par l'abaissement de l'avant du véhicule lors du freinage ou de manière stochastique lors d'un déplacement sur une distance et pendant un temps indéfinis.

4. Procédé selon l'une des revendications 1 à 3, comprenant :
l'évaluation des données de mesure sous la forme d'une évaluation du comportement en oscillation, de préférence dans le sens de l'accélération gravitationnelle et dans le sens transversal, sur la base de paramètres d'oscillation individuels tels que la constante de décroissance, le coefficient d'amortissement, la période d'oscillation, la fréquence.

5. Procédé selon l'une des revendications 1 à 4, comprenant :
la mesure du comportement en oscillation dans le domaine temporel et la classification du comportement en oscillation dans le domaine fréquentiel.

6. Procédé selon l'une des revendications 1 à 5, comprenant :
le stockage des données de mesure.

7. Procédé selon l'une des revendications 1 à 6, comprenant :
la vérification de l'oscillation pour détecter des erreurs évitables comme un rapprochement en biais et/ou un étalonnage incorrect et/ou une vitesse inadaptée.

8. Dispositif destiné à mettre en œuvre un procédé selon l'une des revendications 1 à 7,
- comprenant un moyen d'excitation (13 ; 14) destiné à exciter une oscillation d'un véhicule (4), et
- comprenant un adaptateur (1) relié par l'intermédiaire d'une interface de diagnostic de véhicule (2) à un bus de communication de véhicule (5) du véhicule (4) et à des capteurs (3 ; 7 ; 9) externes à l'adaptateur, qui présente les éléments caractéristiques suivants :
- un moyen de mesure du comportement en accélération, en décélération ou en oscillation au moyen de capteurs (6) internes à l'adaptateur montés dans le véhicule, et
- comprenant un moyen d'évaluation destiné à évaluer les données mesurées au moyen de l'algorithme de classification basé sur l'apprentissage, dans lequel le moyen d'évaluation est conçu pour mettre en œuvre le procédé selon l'une des revendications 1 à 7, dans lequel
- le moyen de mesure est réalisé sous la forme d'un capteur (6) interne à l'adaptateur, qui est monté dans le véhicule et relié à des moyens d'acquisition de valeurs de mesure et qui comprend un capteur d'accélération et/ou de vitesse de rotation.

9. Dispositif selon la revendication 8, **caractérisé en ce que** l'adaptateur (1) est relié sans fil, en particulier par WLAN, UMTS ou Bluetooth, à des capteurs (9) externes à l'adaptateur.

10. Dispositif selon la revendication 8, **caractérisé en ce que** l'adaptateur est connecté à des capteurs (9) externes à l'adaptateur par USB ou LAN.
